# FASCICULE DE BREVET EUROPEEN

(11) **EP 1 254 622 B1**
(45) Date de publication et mention de la délivrance du brevet: **25.06.2003**
(21) Numéro de dépôt: 02356069.1
(22) Date de dépôt: 08.04.2002
(51) Int. Cl.: A47J 31/44

(54) **Machine à boissons chaudes comportant un réceptacle pivotant perforé pour matières aromatiques**
Maschine für heisse Getränke mit einem perforierten Behälter für aromatische Substanzen
Machine for hot beverages with a pivoting perforated receptacle for aromatic substances

(30) Priorité: 04.05.2001 FR 0106002
(43) Date de publication de la demande: 06.11.2002
(73) Titulaire: SEB S.A., 69130 Ecully (FR)
(72) Inventeur: Lallemand, Thomas, 65100 Lourdes (FR)
(74) Mandataire: Kiehl, Hubert

(56) Documents cités:
- DE-A- 3 619 490
- DE-U- 8 806 649
- DE-U- 9 112 320
- US-A- 4 995 311

## Description

La présente invention se rapporte au domaine technique général des machines à boissons chaudes. La présente invention se rapporte plus particulièrement aux appareils comportant une chaudière produisant de l'eau chaude distribuée au dessus d'un réceptacle perforé prévu pour recevoir des ingrédients aromatiques, ce réceptacle comportant une ou plusieurs ouvertures d'écoulement dans sa partie inférieure. La présente invention se rapporte notamment, mais non exclusivement, aux cafetières électriques de type filtre.

A cet effet, le réceptacle perforé, également appelé porte-filtre, présente généralement une forme conique ouverte en sa partie supérieure, et peut recevoir notamment des filtres dans lesquels sont disposés les ingrédients aromatiques tels que la mouture de café. Les filtres peuvent être des filtres jetables, par exemple en papier, ou des filtres permanents, par exemple métalliques ou en tissu.

Les réceptacles perforés montés pivotants par rapport au boîtier de l'appareil facilitent la mise en place et le retrait des ingrédients aromatiques. Généralement, les réceptacles perforés sont de plus montés amovibles en partie ou en totalité par rapport au boîtier de l'appareil.

Dans la plupart des constructions de l'art antérieur, le réceptacle perforé est monté mobile entre une position fermée, utilisée pour la préparation de la boisson, et une position ouverte, dans laquelle les ingrédients ou matières aromatiques peuvent être mis en place ou retirés. L'axe d'articulation est le plus souvent disposé sur la gauche du récipient perforé. Une telle construction s'avère cependant peu ergonomique pour les gauchers.

Le document DE 36 19 490 propose de réaliser une machine à boissons chaudes dans laquelle la charnière du réceptacle perforé peut être placée à droite ou à gauche du boîtier de l'appareil. Cette construction permet de résoudre le problème précité, mais demande un démontage et un remontage de la charnière si celle-ci n'est pas placée du bon côté de l'appareil.

Le document FR 2 682 025 propose de réaliser une machine à boissons chaudes dans laquelle le réceptacle perforé est monté pivotant par rapport à un bras lui-même monté pivotant par rapport au boîtier de l'appareil. La première articulation est agencée sur l'un des côtés de l'appareil et l'autre articulation est agencée sur l'autre côté de l'appareil lorsque le bras est disposé contre l'appareil. Cette construction permet également de résoudre le problème précité, mais présente l'inconvénient d'un débattement important du réceptacle perforé si les deux articulations sont dépliées.

Le document DE 91 12 320 U propose une cafetière électrique dont le porte-filtre peut pivoter à 360° autour d'un axe disposé à l'opposé du réservoir d'eau froide. Toutefois, un conduit ascendant d'eau chaude est agencé selon l'axe de pivotement. Cette disposition gêne notamment le retrait et la mise en place de la verseuse.

L'objet de la présente invention est de proposer une machine à boissons chaudes comportant un réceptacle pivotant perforé pour matières aromatiques dans laquelle l'ouverture dudit réceptacle est facilitée.

Un autre objet de la présente invention est de proposer une machine à boissons chaudes susceptible d'être utilisée dans différentes orientations.

Un autre objet de la présente invention est de proposer une machine à boissons chaudes dont l'utilisation est facilitée.

Un autre objet de la présente invention est de proposer une machine à boissons chaudes dont la construction reste simple.

Les objets assignés à la présente invention sont atteints avec une machine à boissons chaudes, notamment cafetière électrique, comportant une chaudière alimentée par une arrivée d'eau, un réceptacle perforé monté pivotant sous une tête selon un axe entre une position fermée prévue pour la préparation de la boisson et une position ouverte dans laquelle des ingrédients aromatiques prévus pour la préparation de la boisson peuvent être mis en place ou retirés, un diffuseur d'eau chaude raccordé à la chaudière étant disposé au dessus du réceptacle perforé occupant la position fermée, le réceptacle perforé étant susceptible de pivoter par rapport à l'axe dans les deux sens à partir de la position fermée, du fait que le réceptacle perforé est suspendu sous la tête par l'intermédiaire de l'axe. L'utilisateur peut choisir le sens de rotation pour amener le réceptacle perforé dans une position ouverte dans laquelle les ingrédients aromatiques peuvent être mis en place ou retirés. Le retrait et la mise en place d'un récipient de collecte de la boisson tel qu'une verseuse sont facilités. La construction de la machine reste simple. L'axe peut appartenir à la tête ou au réceptacle perforé.

Avantageusement, l'axe est issu de la tête, respectivement du réceptacle perforé, et pivote dans un logement ménagé dans le réceptacle perforé, respectivement dans la tête. L'axe peut par exemple appartenir à la tête ou encore être rapporté sous la tête.

Avantageusement encore, l'axe est issu de la tête, respectivement du réceptacle perforé, et comporte une gorge dans laquelle est engagée une languette appartenant à un verrou monté sur le réceptacle perforé, respectivement sur la tête.

Avantageusement alors, le verrou comporte des crochets engagés dans des découpes ménagées dans le réceptacle perforé, respectivement dans la tête.

Avantageusement encore le réceptacle perforé comporte une enveloppe extérieure montée pivotante selon l'axe sous la tête.

Avantageusement encore le réceptacle perforé comporte un récipient intérieur amovible comprenant une ouverture d'écoulement de la boisson. Cette disposition facilite la mise en place et le retrait des matières aromatiques, le récipient intérieur pouvant être par exemple un cône filtre à parois pleines et à fond perforé prévu pour recevoir des filtres jetables ou lavables.

Selon une forme de réalisation, la machine comporte un socle relié à la tête par un montant. D'autres formes de réalisation sont envisageables, par exemple un socle relié à la tête par deux montants séparés.

Avantageusement alors le socle présente une géométrie circulaire, cette disposition permettant également de faciliter la liberté de positionnement de la machine.

Avantageusement encore, l'axe est agencé sous la tête à l'opposé du montant, la tête pouvant alors couvrir le réceptacle en position fermée, ce qui limite les pertes d'arôme lors de la préparation de la boisson.

Avantageusement le diffuseur est alimenté en eau chaude par un conduit disposé dans le montant.

Avantageusement encore l'axe est agencé selon le plan médian du réceptacle perforé, de préférence sur la périphérie dudit réceptacle.

Avantageusement encore le réceptacle perforé est susceptible de pivoter sur 360° autour de l'axe, cette disposition facilitant la liberté de positionnement de la machine.

Avantageusement encore le réceptacle perforé est susceptible d'occuper une position ouverte à 180° de la position fermée. De préférence, cette position ouverte peut être atteinte par rotation dans l'un ou l'autre sens à partir de la position fermée.

L'invention sera mieux comprise à l'étude d'un exemple de réalisation et d'une variante, pris à titre nullement limitatif, et illustrés dans les figures annexées dans lesquelles :
- la figure 1 est une vue latérale en coupe d'une machine à boissons chaudes, notamment cafetière électrique, comportant un réceptacle perforé pivotant pour matières aromatiques occupant une position fermée prévue pour la préparation de la boisson.
- la figure 2 est une vue en perspective de l'appareil montré à la figure 1, dans laquelle le réceptacle perforé pivotant occupe une position ouverte prévue pour le retrait ou la mise en place des matières aromatiques.
- la figure 3 illustre une variante de réalisation de l'axe de pivotement du réceptacle perforé,
- la figure 4 illustre une variante de réalisation d'un verrou coopérant avec l'axe de pivotement montré à la figure 3,
- la figure 5 illustre le verrou montré à la figure 4 monté sur le réceptacle perforé.

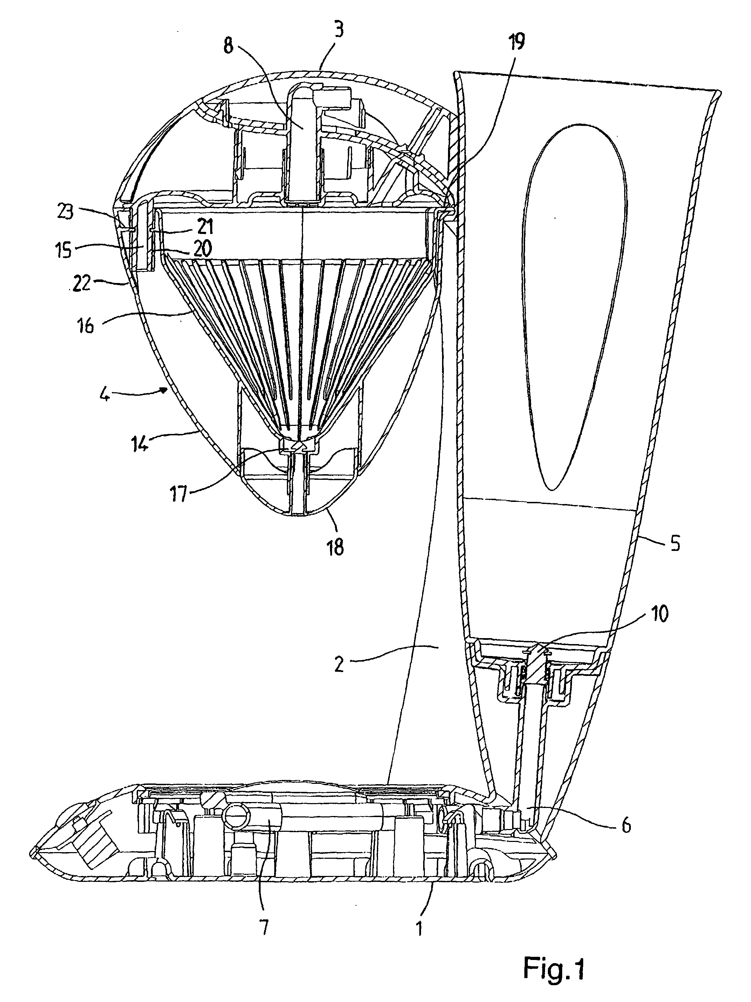

La figure 1 montre une machine à boissons chaudes, notamment cafetière électrique, comportant un socle 1, prévu pour recevoir un récipient de collecte de la boisson, non représenté aux figures, relié par un montant 2 à une tête 3 sous laquelle est agencé un réceptacle perforé 4 monté pivotant, prévu pour recevoir les ingrédients aromatiques nécessaires à la préparation de la boisson.

La machine comporte également un réservoir d'eau 5 alimentant par une arrivée d'eau 6 une chaudière 7 disposée dans le socle 1. La chaudière 7 est raccordée par un conduit, non montré aux figures, à un diffuseur 8 d'eau chaude agencé dans la tête 3 au dessus du réceptacle perforé 4. Le conduit peut avantageusement être disposé dans le montant 2.

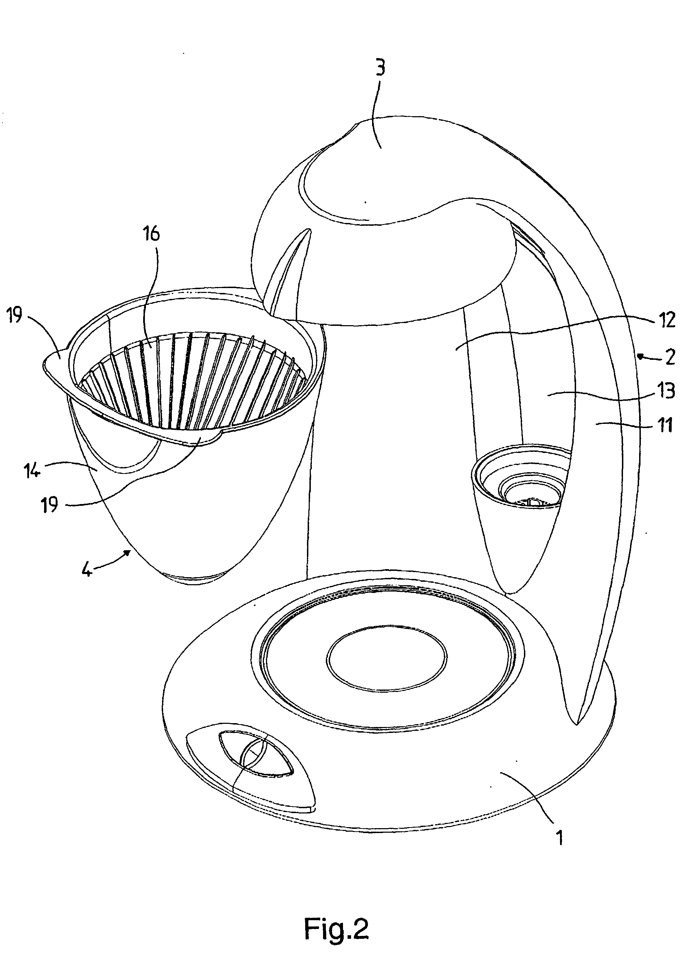

Le réservoir d'eau 5 est amovible et comporte en sa partie inférieure un clapet 10. Tel que montré à la figure 1 le réservoir d'eau 5 est de section circulaire. Tel que mieux visible à la figure 2, le montant 2 comporte deux parties 11, 12 encadrant une découpe 13 prévue pour recevoir le réservoir d'eau. Lorsque la machine est disposée de côté, tel que montré à la figure 1, le réservoir d'eau 5 est visible à l'arrière du montant 2. Lorsque la machine est disposée de face ou de trois quarts, le réservoir d'eau 5 est visible à l'avant du montant 2.

Le réceptacle perforé 4 comporte une enveloppe extérieure 14, ou porte-filtre, montée pivotante sous la tête 3 selon un axe 15. Le réceptacle perforé 4 comporte aussi un récipient intérieur 16, ou cône filtre. Le récipient intérieur 16 est de forme générale conique et comporte dans sa partie inférieure une ouverture 17 prévue pour l'écoulement de la boisson. L'ouverture 17 est associée à un clapet anti-gouttes 18. Le récipient intérieur 16 est amovible par rapport à l'enveloppe extérieure 14. Des languettes de préhension 19 sont ménagées sur le rebord supérieur du récipient intérieur 16.

Tel que bien visible à la figure 1, l'axe 15 est issu de la tête 3 et le réceptacle perforé 4 est suspendu sous la tête 3. L'axe 15 tourillonne dans le réceptacle perforé 4. L'enveloppe extérieure 14 comporte un logement 20 recevant l'axe 15. Une gorge périphérique 21 est ménagée sur la circonférence de l'axe 15. Un verrou 22 est monté sur l'enveloppe extérieure 14. Le verrou 22 présente une languette 23 s'insérant dans la gorge 21.

L'axe 15 est agencé dans le plan médian de la tête 3, à l'opposé du montant 2, à proximité de la partie frontale de la tête 3. L'axe 15 est également agencé dans le plan médian du réceptacle perforé 4, sur la périphérie dudit réceptacle. Le réceptacle perforé 4 en position fermée est disposé sous la tête 3, tel que montré à la figure 1.

Le réceptacle perforé 4 est susceptible de pivoter par rapport à l'axe 15 dans les deux sens à partir de la position fermée représentée à la figure 1. Ainsi la position ouverte du réceptacle perforé 4 représentée à la figure 2 peut être obtenue par pivotement à 180° soit vers la droite, soit vers la gauche, à partir de la position fermée. L'utilisateur peut alors retirer le récipient intérieur 16 grâce aux languettes 19.

L'enveloppe extérieure 14 du réceptacle perforé 4 est suspendue sous la tête 3 par l'intermédiaire de l'axe 15 bloqué par le verrou 22. La languette 23 du verrou 22 reste dans la gorge 21 de l'axe 15 et l'axe 15 tourne dans le logement 20.

Le socle 1 de géométrie circulaire permet de positionner la machine selon l'orientation désirée. Le réservoir 5 réalisé au moins en partie en matériau transparent ou translucide permet à l'utilisateur d'apprécier aisément si un remplissage est nécessaire.

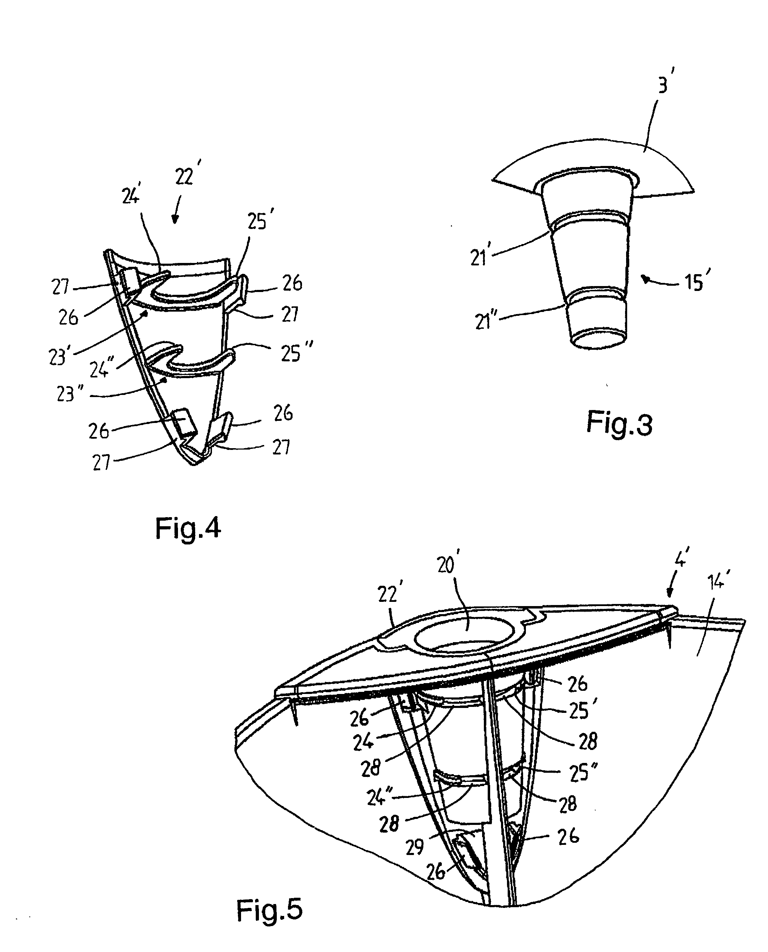

Les figures 3 à 5 illustrent une variante de réalisation de l'articulation du réceptacle perforé par rapport à la tête de l'appareil.

Tel que montré à la figure 3, l'axe 15' est monté sous la tête 3' et présente une géométrie tronconique. Deux gorges périphériques 21', 21" sont ménagées sur la circonférence de l'axe 15'.

Tel que montré à la figure 4, le verrou 22' comporte deux languettes 23', 23" prévues pour coopérer respectivement avec les gorges 21', 21". Chaque languette 23'; 23" comporte deux bras 24', 25'; 24", 25" prévus pour enserrer diamétralement la gorge 21'; 21" correspondante. Le verrou 22' comporte des crochets 26 présentant une tige flexible 27, prévus pour le montage sur l'enveloppe extérieure 14' du réceptacle perforé 4'.

La figure 5 illustre le verrou 22' monté sur l'enveloppe extérieure 14'. Un logement 20' tronconique, prévu pour recevoir l'axe 15', est ménagé dans l'enveloppe extérieure 14'. Des découpes 28 sont ménagées dans la paroi du logement 20' pour recevoir les languettes 23', 23". Des découpes 29 sont ménagées dans la paroi de l'enveloppe extérieure 14' pour recevoir les crochets 26.

Le montage s'effectue de la manière suivante. L'axe 15' est inséré dans le logement 20' puis le verrou 22' est mis en place sur l'enveloppe extérieure 14'. Lorsque les crochets 26 viennent en prise avec l'enveloppe extérieure 14', les languettes 23', 23" sont engagées dans les gorges 21', 21". L'axe 15' peut pivoter dans le logement 20' mais est bloqué en translation. L'enveloppe extérieure 14' du réceptacle perforé 4' est suspendue sous la tête 3' par l'intermédiaire de l'axe 15' bloqué par le verrou 23'.

A titre de variantes complémentaires, la machine n'est pas nécessairement symétrique. La position ouverte n'est pas nécessairement à l'opposé de la position fermée. Le réceptacle pivotant peut ne pas tourner sur 360°, et comporte alors deux positions ouvertes. L'enveloppe extérieure peut être remplacée par un simple support du récipient intérieur. Le récipient intérieur peut ne pas être amovible. Le réceptacle perforé ne comporte pas nécessairement un récipient intérieur associé à une enveloppe extérieure. L'axe peut appartenir au réceptacle perforé au lieu d'être issu de la tête. L'axe tourillonne alors dans la tête, le logement étant ménagé dans la tête et le verrou étant monté sur la tête.

De nombreuses améliorations peuvent être apportées à cette machine dans le cadre des revendications.

## Revendications

1. Machine à boissons chaudes, notamment cafetière électrique, comportant une chaudière (7) alimentée par une arrivée d'eau (6), un réceptacle perforé (4 ; 4') monté pivotant sous une tête (3 ; 3') selon un axe (15 ; 15') entre une position fermée prévue pour la préparation de la boisson et une position ouverte dans laquelle des ingrédients aromatiques prévus pour la préparation de la boisson peuvent être mis en place ou retirés, un diffuseur (8) d'eau chaude raccordé à la chaudière (7) étant disposé au dessus du réceptacle perforé (4 ; 4') occupant la position fermée, le réceptacle perforé (4 ; 4') étant susceptible de pivoter par rapport à l'axe (15 ; 15') dans les deux sens à partir de la position fermée, **caractérisé en ce que** le réceptacle perforé (4; 4') est suspendu sous la tête (3; 3') par l'intermédiaire de l'axe (15; 15').

2. Machine selon la revendication 1, **caractérisé en ce que** l'axe (15 ; 15') est issu de la tête (3; 3'), respectivement du réceptacle perforé, et pivote dans un logement (20; 20') ménagé dans le réceptacle perforé (4; 4'), respectivement dans la tête.

3. Machine selon l'une des revendications 1 ou 2, **caractérisé en ce que** l'axe (15 ; 15') est issu de la tête (3 ; 3'), respectivement du réceptacle perforé, et comporte une gorge (21 ; 21', 21") dans laquelle est engagée une languette (23; 23', 23") appartenant à un verrou (22; 22') monté sur le réceptacle perforé (4 ; 4'), respectivement sur la tête.

4. Machine selon la revendication 3, **caractérisé en ce que** le verrou (22') comporte des crochets (26) engagés dans des découpes (29) ménagées dans le réceptacle perforé (4'), respectivement dans la tête.

5. Machine selon l'une des revendications 1 à 4, **caractérisé en ce que** le réceptacle perforé (4; 4') comporte une enveloppe extérieure (14; 14') montée pivotante selon l'axe (15 ; 15') sous la tête (3).

6. Machine selon l'une des revendications 1 à 5, **caractérisé en ce que** le réceptacle perforé (4) comporte un récipient intérieur (16) amovible comprenant une ouverture (17) d'écoulement de la boisson.

7. Machine selon l'une des revendications 1 à 6, **caractérisé en ce qu'**elle comporte un socle (1) relié à la tête (3) par un montant (2).

8. Machine selon la revendication 7, **caractérisé en ce que** le socle (1) présente une géométrie circulaire.

9. Machine selon l'une des revendications 7 ou 8, **caractérisé en ce que** l'axe (15) est agencé sous la tête (3) à l'opposé du montant (2).

10. Machine selon l'une des revendications 7 à 9, **caractérisé en ce que** le diffuseur (8) est alimenté en eau chaude par un conduit disposé dans le montant (2).

11. Machine selon l'une des revendications 1 à 10, **caractérisé en ce que** le réceptacle perforé (4) est susceptible de pivoter sur 360° autour de l'axe (15).

12. Machine selon l'une des revendications 1 à 11, **caractérisé en ce que** le réceptacle perforé (4) est susceptible d'occuper une position ouverte à 180° de la position fermée.

## Claims

1. A hot beverage machine, in particular an electric coffee maker, the machine comprising a boiler (7) fed by a water feed (6), a perforated receptacle (4; 4') pivotally mounted beneath a head (3; 3') to pivot about a pivot pin (15; 15') between a closed position for preparing the beverage and an open position in which the aromatic ingredients for preparing the beverage can be put into place or removed, a hot water dispenser (8) connected to the boiler (7) being placed over the perforated receptacle (4; 4') when it is occupying its closed position, the perforated receptacle (4; 4') being capable of pivoting away from the closed position in both directions about the pivot pin (15; 15'), the machine being **characterized in that** the perforated receptacle (4; 4') is suspended beneath the head (3; 3') by the pivot pin (15; 15').

2. A machine according to claim 1, **characterized in that** the pivot pin (15; 15') projects from the head (3; 3') or from the perforated receptacle, and pivots in a recess (20; 20') formed in the perforated receptacle (4; 4') or in the head, respectively.

3. A machine according to claim 1 or claim 2, **characterized in that** the pivot pin (15; 15') projects from the head (3; 3') or from the perforated receptacle, and includes a groove (21; 21', 21") in which there is engaged a tab (23; 23', 23") belonging to a catch (22; 22') mounted on the perforated receptacle (4; 4') or the head, respectively.

4. A machine according to claim 3, **characterized in that** the catch (22') has hooks (26) engaged in cutouts (29) formed in the perforated receptacle (4') or in the head, respectively.

5. A machine according to any one of claims 1 to 4, **characterized in that** the perforated receptacle (4; 4') comprises an outer cup (14; 14') mounted to pivot beneath the head (3) about the axis of the pivot pin (15; 15').

6. A machine according to any one of claims 1 to 5, **characterized in that** the perforated receptacle (4) includes a removable inner receptacle (16) having an opening (17) through which the beverage flows out.

7. A machine according to any one of claims 1 to 6, **characterized in that** it includes a base (1) connected to the head (3) by a upright (2).

8. A machine according to claim 7, **characterized in that** the base (1) is circular in shape.

9. A machine according to claim 7 or claim 8, **characterized in that** the pivot pin (15) is arranged beneath the head (3) opposite from the upright (2).

10. A machine according to any one of claims 7 to 9, **characterized in that** the dispenser (8) is fed with hot water via a duct placed in the upright (2).

11. A machine according to any one of claims 1 to 10, **characterized in that** the perforated receptacle (4) is capable of pivoting through 360° about the axis of the pivot pin (15).

12. A machine according to any one of claims 1 to 11, **characterized in that** the perforated receptacle (4) is capable of occupying an open position at 180° from the closed position.

## Patentansprüche

1. Maschine für Heißgetränke, insbesondere eine elektrische Kaffeemaschine, die einen von einer Wasserzuführung (6) versorgten Kessel (7) und einen perforierten Auffang (4; 4') aufweist, der unter einem Kopf (3; 3') entlang einer Achse (15; 15') zwischen einer geschlossenen Position, die zur Zubereitung des Getränks vorgesehen ist, und einer geöffneten Position schwenkbar angebracht ist, in der die aromatischen Zutaten, die zur Zubereitung des Getränks vorgesehen sind, eingebracht oder entnommen werden können, wobei ein Heißwasserdiffusor (8), der an den Kessel (7) angeschlossen ist, über dem perforierten Auffang (4; 4') angeordnet ist, der die geschlossene Position einnimmt, wobei der perforierte Auffang (4; 4') ausgehend von der geschlossenen Position bezüglich der Achse (15; 15') in beiden Richtungen schwenken kann, **dadurch gekennzeichnet, daß** der perforierte Auffang (4; 4') mittels der Achse (15; 15') unter dem Kopf (3; 3') aufgehängt ist.

2. Maschine nach Anspruch 1, **dadurch gekennzeichnet, daß** die Achse (15; 15') aus dem Kopf (3; 3') bzw. dem perforierten Auffang herausgeführt ist und in einer Aufnahme (20; 20') schwenkt, die in dem perforierten Auffang (4; 4') bzw. in dem Kopf vorgesehen ist.

3. Maschine nach einem der Ansprüche 1 oder 2, **dadurch gekennzeichnet, daß** die Achse (15; 15') aus dem Kopf (3; 3') bzw. dem perforierten Auffang herausgeführt ist und eine Rille (21; 21', 21") aufweist, in die eine Lasche (23; 23', 23") eingreift, die zu einem Riegel (22; 22') gehört, der an dem perforierten Auffang (4; 4') bzw. an dem Kopf angebracht ist.

4. Maschine nach Anspruch 3, **dadurch gekennzeichnet, daß** der Riegel (22') Haken (26) aufweist, die in Ausschnitte (29) eingreifen, die in dem perforierten Auffang (4') bzw. in dem Kopf vorgesehen sind.

5. Maschine nach einem der Ansprüche 1 bis 4, **dadurch gekennzeichnet, daß** der perforierte Auffang (4; 4') eine äußere Ummantelung (14; 14') aufweist, die nach der Achse (15; 15') unter dem Kopf (3) schwenkbar angebracht ist.

6. Maschine nach einem der Ansprüche 1 bis 5, **dadurch gekennzeichnet, daß** der perforierte Auffang (4) einen inneren abnehmbaren Behälter (16) mit einer Ablauföffnung (17) für das Getränk aufweist.

7. Maschine nach einem der Ansprüche 1 bis 6, **dadurch gekennzeichnet, daß** sie einen Sockel (1) aufweist, der durch eine Säule (2) mit dem Kopf (3) verbunden ist.

8. Maschine nach Anspruch 7, **dadurch gekennzeichnet, daß** der Sockel (1) eine kreisförmige Geometrie aufweist.

9. Maschine nach einem der Ansprüche 7 oder 8, **dadurch gekennzeichnet, daß** die Achse (15) unter dem Kopf (3) gegenüber der Säule (2) angeordnet ist.

10. Maschine nach einem der Ansprüche 7 bis 9, **dadurch gekennzeichnet, daß** der Diffusor (8) von einer Leitung mit Heißwasser versorgt wird, die in der Säule (2) angeordnet ist.

11. Maschine nach einem der Ansprüche 1 bis 10, **dadurch gekennzeichnet, daß** der perforierte Auffang (4) über 360° um die Achse (15) schwenken kann.

12. Maschine nach einem der Ansprüche 1 bis 11, **dadurch gekennzeichnet, daß** der perforierte Auffang (4) eine Position einnehmen kann, die um 180° von der geschlossenen Position geöffnet ist.
